# EUROPEAN PATENT SPECIFICATION

(11) **EP 0 554 207 B1**
(45) Date of publication and mention of the grant of the patent: **27.08.1997**
(21) Application number: 93610010.6
(22) Date of filing: 28.01.1993
(51) Int. Cl.: B07C 5/36, B07C 5/02

(54) **Installation for sorting items**
Anordnung zum Sortieren von Artikeln
Installation de tri d'articles

(30) Priority: 28.01.1992 DK 104/92
(43) Date of publication of application: 04.08.1993
(73) Proprietor: F.P. INDUSTRISERVICE A/S, DK-7100 Vejle (DK)
(72) Inventor: Sloth, Steen Henrik, DK-8700 Horsens (DK)
(74) Representative: Larsen, Hans Ole

(56) References cited:
- EP-A- 0 439 674
- WO-A-91/01818
- WO-A-92/07332
- FR-A- 2 620 952
- US-A- 4 356 908
- US-A- 5 041 996

## Description

### Background of the invention

The invention relates to a sorting plant for the sorting out of items which have special visual characteristics and are mixed with items which have other characteristics, especially items in the form of refuse sacks or refuse bags, where the visual characteristics are a colour and/or size, whereby said mixed items are conducted to a sorting plant which has conveying and sorting means for the distribution of the items on at least one conveyor belt in rows and in a substantially straight line past at least one visual scanning device which registers the items with the specific characteristics and transfers them for separate collection, said conveying means comprise at least one conveyor belt with alignment capabilities, and that said sorting means comprise a manoeuvring arm with a free end which, upon a pulse from the scanning equipment, executes a transverse movement across the said remaining part of the belt precisely when one of the items with the specific characteristics passes, and hereby pushes the item over to an adjacent belt.

The sorting of items in accordance with their external characteristics, such as a certain colour, can be carried out manually by removing the relevant items from the remaining items when, for example, these are carried forward on a conveyor.

However, this manual sorting is not particularly expedient, the reason being that it not only requires a number of personnel who are strained by the monotonous work, but it can also involve regard for the working environment, which means that this manual sorting can not be carried out for reasons of security or hygiene and similar conditions.

There is thus a need for the mechanical sorting of items which can be carried out remotely, whereby the sorting can be effected while fulfilling all environmental requirements. This need manifests itself particularly in the sorting of refuse, where an efficient and rapid sorting of the refuse is a precondition for the sorting to be able to be carried out without increasing the costs.

Moreover, it is also a precondition that the so-called source sorting principle can be established without this leading to an increase in costs. The principle comprises a refuse bag system with two differently marked bags, so that certain refuse can be placed in one of the bags while the remainder is placed in the other.

A method and a sorting plant is known from PCT publication no. WO 90/11142, but the known plant does not have sufficient capacity to fulfill the demands for speed and precise sorting which are the prerequisites of a modern sorting plant. This lack of capacity is due first and foremost to the fact that the items passing through the plant must be arranged at a mutual distance of at least 1.6 m between them.

In the known plant, the sorting of the items with specific characteristics from all other items is effected by having all of the items encounter a controllable wall, the plane of which extends vertically up from the upper side of a conveyor belt, and where the wall of the control elements are turned so that the plane of the wall is directed in an inclined manner either to the one side or the other in relation to the forward movement of the conveyor belt, whereby the items with the specific characteristics are led out along the one side edge of the belt, while all remaining items are led out along the second side edge.

When the items are conveyed further and reach the end edge of the belt, they fall down on two inclined planes or chutes which meet at the top in a common longitudinal edge which extends in extension of the middle of the belt, and are thereafter led by the chutes to each their collection containers.

It will be understood that it is the length of the above-mentioned wall which sets the limit for the minimum distance between successive items during the final sorting.

US-A-5 041 996 discloses a method for the sorting of items which have specific visual characteristics and are mixed with items which have other characteristics, whereby said mixed items are conducted to a sorting plant comprising conveying and sorting means and are distributed on at least one conveyor belt, so that all items are conveyed in rows and in a substantially straight line past at least one visual scanning device which registers the items with the specific characteristics, and wherein the conveying means utilized comprise at least one conveyor belt with alignment capabilities and a subsequent belt (discharge conveyor) extends as a flat belt in the feeding direction to a last part.

Ejector devices exist, which are not, however, described any further, for ejecting objects away from the sorting belt. The method is intended for sorting small objects, especially small objects of plastic, and is not suited for the sorting of heavy and voluminous objects, such as items in the form of refuse sacks or bags.

US-A-4 356 908 also discloses a method and an apparatus for the sorting of items which have specific characteristics and are mixed with items which have other characteristics, whereby said apparatus comprise a manoeuvring arm with a free end, said free end is used in a transverse movement across the belt to push the items with the specific characteristics off the belt and over on to an adjacent belt.

The manoeuvring arm in this case consists of a plate, two corners of which are mounted on each its endless string protruding at a right angle from the strings. The strings extend parallel at a distance to each other around four sets of rollers where each set of rollers is placed in each a corner of a square so that the strings between the rollers follow straight lines being parallel in pairs. When the rollers rotate the lower edge of the plate will describe a straight course across the sorting belt and scrape an object to be sorted from the sorting belt to a receiving belt extending next to the sorting belt. Only one plate is to complete an entire revolution with the strings in order to sweep an object from the sorting belt to the receiving belt; consequently, the sorting belt must either run slowly or the objects must have a large distance to each other on the sorting belt in order for the plate to have time for sweeping two successive objects from the sorting belt if both such objects are to be sorted out.

The capacity of such a plant which is equipped with such an ejector device thus becomes low and will not fulfill modern demands for sorting speed.

### Advantages of the invention

With the starting point in the known methods and the known sorting plants, it is the object of the invention to present a configuration of a sorting plant which is such that despite a considerably smaller distance between the individual items on the conveyor belt, where the sorting takes place, there can still be effected a safe and reliable sorting at a speed which satisfies the demands on a modern sorting plant for the sorting of refuse bags, where the mixture of items is distributed on at least one conveyor belt.

This object is achieved by a sorting plant of the kind presented in the preamble, said sorting plant according to the invention being characterized in that said at least one belt opens out over a transversely-extending belt which similarly has alignment capabilities along a first part, while the remaining part extends as a flat belt, that said manoeuvring arm is configured in such a manner that the said free end, which pushes the items with the specific characteristics, describes a flat path of movement over the said remaining part of the belt, after which the end returns across the belt in an upwardly-rising movement and is thereafter lowered towards the belt at the side edge of the belt and that the speed of said free end is greatest during the actual pushing movement.

By configuring the sorting plant's manoeuvring arm in such a manner that the free end of the arm, which pushes the items with the specific characteristics, describes a flat movement over the said remaining part of the belt, after which the end returns across the belt with an upwardly-rising movement and is thereafter lowered towards the belt at the belt's side edge, a non-uniform rate of movement is achieved across the belt with the items, in that the speed of the manoeuvring arm's free end is greatest during the actual pushing movement over the belt, so that the plant can sort items even at belt speeds right up to 1.6 m/sec.

As disclosed in claim 2, it is expedient to mount the manoeuvring arm on an arm which is turned by a controlled driving unit for movement of the manoeuvring arm during its pushing movement, in that this hereby allows the use of camera scanning of the conveyed items, and by the supplying of pulses to the driving unit ensure that the correct items are sorted from among the row of conveyed items.

Finally, as diclosed in claim 3, it is expedient that the means of alignment on the conveyor belts can with advantage be produced by supporting the conveyor belts in their longitudinal direction with a set of rollers, where each set has a centre-roller with a substantially horizontal axis, and at least one side-roller with an eccentric axis under each of the belt's side edges, the axes of said side rollers pointing at an angle upwards and away from the centremost roller.

### The drawing

An example embodiment of the invention will now be described in more detail with reference to the drawing, where
- fig. 1: shows a sorting plant according to the invention seen from above,
- fig. 2: shows the plant seen from the side,
- fig. 3: shows a section through a sorting plant seen in the direction III-III in fig. 1,
- fig. 4: is a diagram showing the cycle of movement described by the manoeuvring arm,
- fig. 5: shows a section through one of the aligning conveyor belts seen in the direction V-V in fig. 1,
- fig. 6: is a diagrammatic illustration of the movement pattern of the conveyor belts during normal sorting operations,
- fig. 7: shows the movement pattern when operating with only one kind of sorted items,
- fig. 8: shows the movement pattern when operating with only the remaining kinds of items, and
- fig. 9: shows the movement pattern when operating with only one conveyor line with sorting.

### Description of the example embodiment

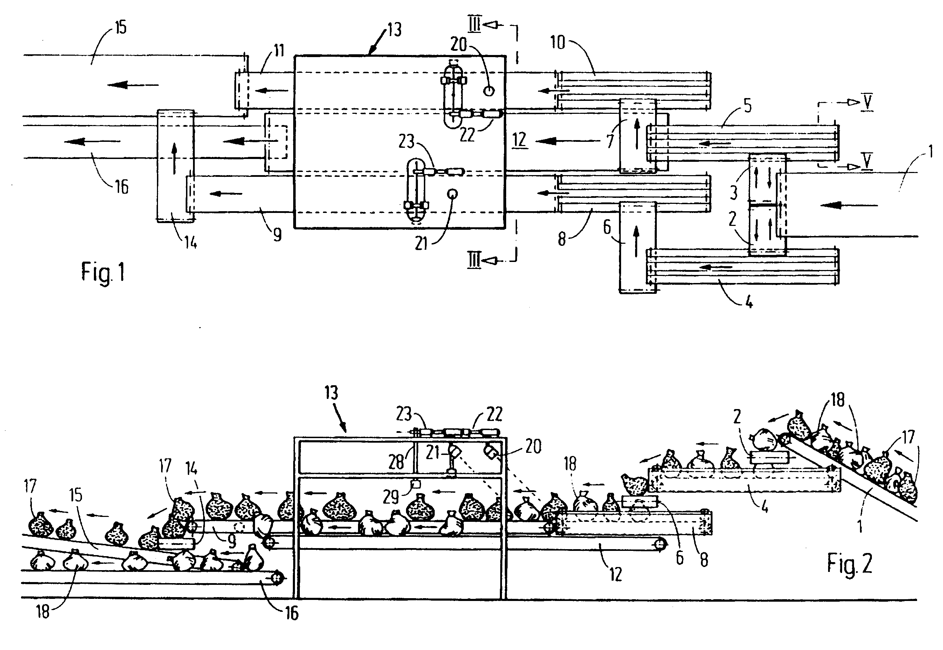

In figs. 1 and 2 is shown an example embodiment of the sorting plant according to the invention.

The plant comprises a number of conveyor belts for distribution and alignment in rows of the incoming items 17, 18, and also a sorting section 13 where the sorting out of the marked items 18 takes place.

The plant will be described solely in connection with refuse sacks or bags, and such that the plant is supplied with a mixture of bags, some of which are coloured, for example green, said bags being filled, for example, with organic waste.

In the drawing, these bags appear as white bags, while the remaining bags 17 are dotted. The bags 18 with organic waste can be reused in composting, while the remaining bags 17 can be treated as normal refuse for incineration.

The object of the invention is to effect this sorting of the bags in a careful manner, so that they are undamaged and thus do not spill out the refuse. Moreover, in such a manner that the sorting is effected quickly and hereby without any delay in the handling of the refuse, and also that the plant must be capable of operating without any immediate physical presence of the personnel. Finally, that the plant in other words can operate with remote supervision and possible remote control.

The refuse bags are collected in a commonly-known manner in a mixed state from the users, and are delivered to the sorting plant where a conveyor or the like 1, as shown in fig. 2, feeds the bags 17, 18 in from the right.

The bags are then transferred to two transversely-extending belts 2, 3, the conveying directions of which, as indicated in fig. 1, can be reversed.

When the whole of the plant is in operation, the belts 2, 3 will move in opposite directions so that the bags 17, 18 are equally distributed on each of their succeeding belts 4 and 5. As shown, these two belts 4, 5 extend at right-angles to the distribution belts 2, 3.

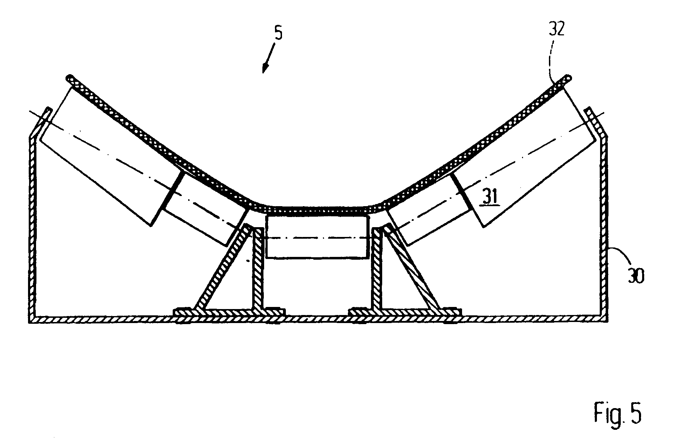

As shown in fig. 5, the two belts 4, 5 are configured with eccentric side-rollers 31 in the supports 30. When the conveyor is running, these rollers 31 generate vibration in the side edges 32 of the belt, which will bring the bags in movement downwards towards the bottom of the conveyor, so that all of the bags will eventually extend in a straight line.

To ensure a reasonable mutual distance between the bags on the belts, the belt speeds are selected so that the receiving belts 4 and 5 have a higher speed than the delivery belts 2 and 3. This principle also applies for the belts after the alignment belts 4 and 5, i.e. the transversely-extending belts 6 and 7, which lead the bags in on the longitudinal belts 8, 9, and 10, 11, which lead the bags in through the sorting section 13, as shown in figs. 1 and 2.

In order to ensure that the bags are in a straight line during the sorting, the first part of the belts 8 and 10 are configured in a manner corresponding to that shown in fig. 5 for the formation of the vibrating and therewith the aligning characteristic.

Hereafter, the belt merges into ordinary flat belts 9 and 11 which extend in a parallel manner at a certain distance.

Between the belts 9 and 11, and at some distance below these belts, there is provided a belt 12 on to which the sorted bags 18 will be transferred in the sorting.

After this sorting, the bags are conveyed forward on three tracks, i.e. the bags 18 which have been sorted out on the centremost belt 12, which conveys them to a delivery belt 16 for composting or other form of reuse, where the contents for example are glass, metal etc.

The remaining bags 17 will remain on the two belts 9 and 11, and in order to gather these on one belt, at the end of one of these belts there is placed a belt 14 which conveys the bags to a common delivery belt 15 where all the unsorted bags are gathered. From here they can be led away for further processing, for example incineration or possibly further sorting etc.

To provide an impression of the speed of the belts, it can be disclosed that the two distributor belts 2 and 3 can have a speed of 0.2 m per second, the alignment belts 4 and 5 a speed of 0.4 m per second, the transversely-extending belts 6 and 7 a speed of 0.8 per second, and the three belts 8, 9, 12 and 10, 11 through the sorting section 13 a speed of 1.6 m per second. The outgoing belts 14, 15 and 16 will typically also have a speed of 1.6 m per second.

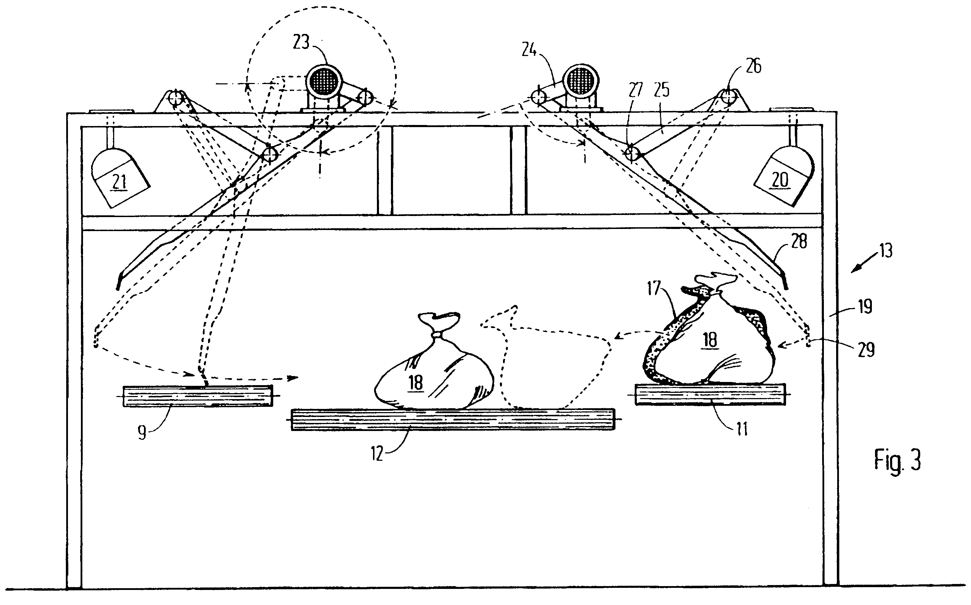

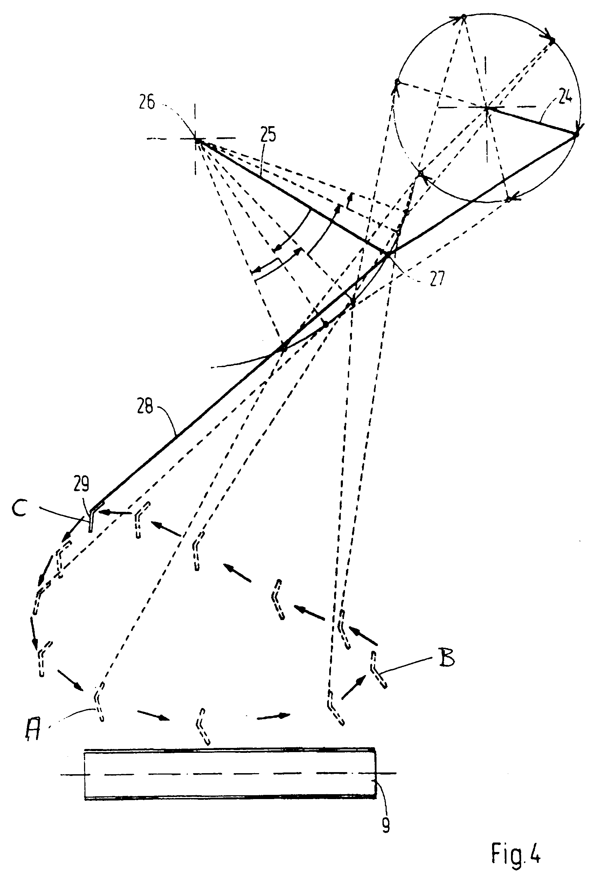

The sorting section 13 will now be described in more detail with reference to figs. 3 and 4.

As shown in fig. 3, the section 13 is built up on a frame or chassis 19 which extends on both sides of and over the three belts 9, 12 and 11.

On the chassis there is mounted the scanning equipment and the manoeuvring equipment.

The scanning equipment consists of commonly-known equipment comprising two cameras 20, 21 which, as indicated in fig. 2, supervise the bags when they approach the section 13. In order to obtain completely reliable identification by means of colours, there must be a contrast to the background which, for example, can be achieved by means of special light or colouring of the surroundings, also including the actual belts 9 and 11.

The cameras are connected to a computer which receives pulses from the cameras and also from a pulse transmitter in the belts 8, 9 and 10, 11, so that the manoeuvring arm, as will be explained in the following, can with considerable precision sort out an identified bag 18 on one of the belts.

The sorting out is effected as mentioned by means of a manoeuvring arm 28 which is suspended above each of the two conveyor belts 9 and 11. The arm 28 is suspended and housed in such a manner that the end of the arm in one manoeuvre will describe the path of movement as indicated in fig. 4.

This is achieved by having a point 27 on the arm 28, said point 27 lying at a distance above the centre of the arm, hinged to the end of a rocker arm 25, the other end of which is in turn suspended on an axle 26 on the top of the chassis.

The upper end of the arm 28 is pivotably connected to a short arm 24 which is secured to the output shaft on a driving unit 22. This driving unit comprises a commonly-known asynchronous motor which is built together with a brake/clutch unit and a gear.

On the free end of the arm 28 there is secured a blade 29 which points downwards, and which hereby serves as an effective pusher/scraper for the arm when a bag is to be removed from the belt.

As will appear from the movement diagram in fig. 4, the blade describes a curvate movement which takes its starting point A at the side of the one side edge 32 of the belt 9 and above said belt 9.

In a very short interval of time the blade will pass over the belt 9 to a position B, whereby a bag will be pushed off the belt, as indicated to the left in fig. 3. Hereafter, the blade 29 will be lifted upwards and be moved towards the opposite side edge 32 of the belt 9 to point C, after which the blade 29 will be lowered towards the starting position A.

As will appear from the diagram, the speed of the blade 29 will be subject to great variation, in that the distances between the individual positions of the blade 29 as indicated in fig. 4 are traversed in the same time, namely a constant part of the arm's 24 turning movement. There is hereby achieved a particularly expedient sequence, i.e. a quick manoeuvring movement from position A to position B, which means that if the arm 24 has a speed of rotation of 1 second, bags right down to a length of 25 cm will be able to be pushed while standing up against other bags on the belt in a row, and which are conveyed at a speed of up to 1.6 m per second, without any disorder being created in the rows.

In addition to this advantage, there is the not insignificant factor that the slowing down from position C to A takes place evenly and smoothly and at reduced speed of movement, which provides the least possible inertia effect on the manoeuvring arm and its suspension as a whole.

In order to avoid incorrect sorting, the scanning equipment can be supplemented with a checking of the size of the bag, whereby the erroneous generation of signals is eliminated.

It will also lie within the scope of the invention to use other characteristics than colour and size. For example, bags or items can be marked by being provided with bar codes, electronic pulse generators and the like before they are conveyed into the plant.

For the control of the plant, the individual belts are provided with equipment for frequency conversion and herewith for stepless speed regulation, and with a revolution counter.

As mentioned, the two conveyors 9 and 11 which feed the bags through the sorting section 13 are provided with pulse generators for the reliable registration of the position of the individual bags as these are being conveyed.

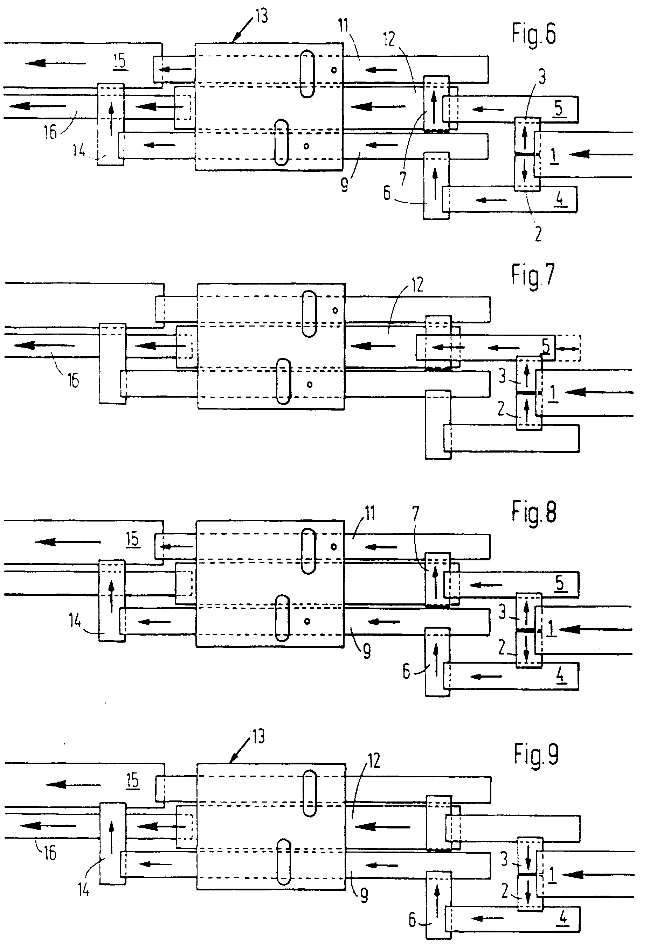

The different operational possibilities of the plant according to the invention will now be described with reference to figs. 6-9.

The operation as described above is the normal working mode where the whole of the plant is utilized and with all belts being used. This working mode is shown in fig. 6, where the arrows illustrate the operations.

Where sorting is not necessary, for example when all of the bags being handled contain materials which are to be conveyed further for reuse, the plant is used as shown in fig. 7. It will be noted that the alignment belt 5 not only receives all of the bags, but also that it is pushed inwards for delivery directly on to the centremost belt 12.

Conversely, when all of the bags being handled are to be conveyed further for e.g. incineration, the plant is used as shown in fig. 8. Here, the bags are apportioned to the two side belts 9 and 11 and leave the plant on the belt 15.

With the modes of operation shown in figs. 7 and 8, the sorting section is thus not in operation.

When only a part of the plant is required to run, for example for reasons of service or reduced capacity, the mode of operation shown in fig. 9 can be utilized. The sorting section thus operates over only one belt, i.e. belt 9. In a not-shown mode of operation, it can be the belt 11 which is used while the belt 9 is stationary.

## Claims

1. Sorting plant for the sorting out of items (18) which have special visual characteristics and are mixed with items (17) which have other characteristics, especially items (17, 18) in the form of refuse sacks or refuse bags, where the visual characteristics are a colour and/or size, whereby said mixed items (17, 18) are conducted to a sorting plant which has conveying and sorting means for the distribution of the items (17, 18) on at least one conveyor belt (8, 9, 10, 11) in rows and in a substantially straight line past at least one visual scanning device (20, 21) which registers the items (18) with the specific characteristics and transfers them for separate collection, said conveying means comprise at least one conveyor belt (4, 5) with alignment capabilities, and that said sorting means comprise a manoeuvring arm (24-28) with a free end (29) which, upon a pulse from the scanning equipment (20, 21), executes a transverse movement across the said remaining part (9, 11) of the belt (8, 10) precisely when one of the items (18) with the specific characteristics passes, and hereby pushes the item (18) over to an adjacent belt (12), **characterized** in that said at least one belt (4, 5) opens out over a transversely-extending belt (8, 10) which similarly has alignment capabilities along a first part, while the remaining part (9, 11) extends as a flat belt, that said manoeuvring arm (24-28) is configured in such a manner that the said free end (29), which pushes the items (18) with the specific characteristics, describes a flat path of movement over the said remaining part (9, 11) of the belt (8, 10), after which the end (29) returns across the belt (9, 11) in an upwardly-rising movement and is thereafter lowered towards the belt at the side edge of the belt and that the speed of said free end is greatest during the actual pushing movement.

2. Sorting plant according to claim 1, **characterized in** that the upper end of the manoeuvring arm (28) is pivotably connected to the end of a turning arm (24), the opposite end of which is secured to a rotatable output shaft on a driving unit (22), and that the manoeuvring arm (28), at a point (27) between its upper end and the free end (29), is hinged to the end of a rocker arm (25) which is suspended at a fixed point (26) above the belt (9, 11) in such a manner that one revolution of the arm (24) results in the said path and cycle of movement of the free end (29) of the manoeuvring arm (24-28).

3. Sorting plant according to claim 1, **characterized in** that said conveyor belts (4, 5, 8, 10) with the alignment capabilities in their longitudinal direction are supported by a set of rollers, where each set has a centremost roller with a substantially horizontal axis and at least one side-roller (31) with an eccentric axis under each of the side edges of the belts (4, 5, 8, 10), the axes of said side-rollers (31) pointing at an angle upwards and away from the centremost roller.

## Patentansprüche

1. Sortieranlage zum Aussortieren von Gegenständen (18), die spezielle optische Merkmale aufweisen und mit Gegenständen (17) vermischt sind, die andere Merkmale aufweisen, insbesondere von Gegenständen (17,18) in Form von Müllsäcken oder Müllbeuteln, wobei die optischen Merkmale eine Farbe und/oder eine Größe sind, wobei die vermischten Gegenstände (17,18) zu einer Sortieranlage geleitet werden, die Förder- und Sortiereinrichtungen für die Verteilung der Gegenstände (17,18) auf wenigstens einem Förderband (8,9,10,11) in Reihen und in einer im wesentlichen geraden Linie an wenigstens einer optischen Abtastvorrichtung (20,21) vorbei aufweist, die die Gegenstände (18) mit den speziellen Merkmalen registriert und sie zum separaten Sammeln überführt, wobei die Fördereinrichtung wenigstens ein Förderband (4,5) mit Ausrichtfähigkeiten umfaßt, und die Sortiereinrichtung einen Verschiebearm (24-28) mit einem freien Ende (29) umfaßt, das auf einen Impuls von der Abtasteinrichtung (20,21) hin eine Querbewegung über den verbleibenden Teil (9,11) des Bandes (8,10) genau dann ausführt, wenn einer der Gegenstände (18) mit den speziellen Merkmalen durchläuft und so den Gegenstand (18) auf ein benachbartes Band (12) schiebt, **dadurch gekennzeichnet**, daß sich das wenigstens eine Band (4,5) über einem querverlaufenden Band (8,10) öffnet, das ebenfalls Ausrichteigenschaften über einen ersten Teil aufweist, während der verbleibende Teil (9,11) als flaches Band verläuft, und daß der Verschiebearm (24-28) so aufgebaut ist, daß das freie Ende (29), das die Gegenstände (18) mit den speziellen Merkmalen schiebt, über den verbleibenden Teil (9,11) des Bandes (8,10) einen flachen Bewegungsweg beschreibt, wobei das Ende (29) anschließend in einer nach oben ansteigenden Bewegung über das Band (9,11) zurückkehrt und danach am seitlichen Rand des Bandes auf das Band zu abgesenkt wird, und daß die Geschwindigkeit des freien Endes bei der eigentlichen Schiebebewegung am höchsten ist.

2. Sortieranlage nach Anspruch 1, **dadurch gekennzeichnet**, daß das obere Ende des Verschiebearms (28) schwenkbar mit dem Ende eines Dreharms (24) verbunden ist, dessen gegenüberliegendes Ende an einer drehbaren Ausgangswelle an einer Antriebseinheit (22) befestigt ist, und daß der Verschiebearm (28) an einem Punkt (27) zwischen seinem oberen Ende und dem freien Ende (29) an dem Ende eines Schwingarms (25) gelenkig angebracht ist, der an einem festen Punkt (26) oberhalb des Bandes (9,11) so aufgehängt ist, daß eine Drehung des Arms (24) den Weg und Zyklus der Bewegung des freien Endes (29) des Verschiebearms (24-28) bewirkt.

3. Sortieranlage nach Anspruch 1, **dadurch gekennzeichnet**, daß die Förderbänder (4,5,8,10) mit den Ausrichteigenschaften in ihrer Längsrichtung von einem Satz Rollen getragen werden, wobei jeder Satz eine mittlere Rolle mit einer im wesentlichen horizontalen Achse und wenigstens eine seitliche Rolle (31) mit einer exzentrischen Achse unter jedem der seitlichen Ränder der Bänder (4,5,8,10) aufweist, wobei die Achsen der seitlichen Rollen (31) in einem Winkel nach oben und von der mittleren Rolle weg gerichtet sind.

## Revendications

1. Installation de tri servant à l'élimination par tri d'articles (18) qui ont des caractéristiques visuelles spéciales et qui sont mélangés à des articles (17) ayant d'autres caractéristiques, notamment des articles (17, 18) sous la forme de sacs pour détritus ou des sacs-poubelles, les caractéristiques visuelles étant une couleur et/ou une taille, lesdits articles mélangés (17, 18) étant amenés à une installation de tri qui comporte des moyens d'acheminement et de tri pour la répartition des articles (17, 18) sur au moins une bande transporteuse (8, 9, 10, 11) en rangs et suivant une ligne sensiblement droite, pour qu'ils passent devant au moins un dispositif d'analyse optique (20, 21) qui enregistre les articles (18) ayant les caractéristiques spécifiques et les transfère pour une collecte séparée, lesdits moyens d'acheminement comprenant au moins une bande transporteuse (4, 5) présentant des possibilités d'alignement, et lesdits moyens de tri comprenant un bras de manoeuvre (24 à 28) ayant une extrémité libre (29) qui, lors d'une impulsion provenant du matériel d'analyse (20, 21), exécute un mouvement transversal sur ladite partie restante (9, 11) de la bande (8, 10) exactement au moment du passage de l'un des articles (18) ayant les caractéristiques spécifiques, pour ainsi pousser l'article (18) vers une bande (12) adjacente, caractérisée en ce que ladite au moins une bande (4, 5) débouche au-dessus d'une bande (8, 10) qui s'étend transversalement et qui présente, de manière similaire, des possibilités d'alignement le long d'une première partie, tandis que la partie restante (9, 11) s'étend sous la forme d'un bande plate, en ce que le bras de manoeuvre (24 à 28) a une forme telle que ladite extrémité libre (29), qui pousse les articles (18) ayant les caractéristiques spécifiques, décrit une trajectoire plate au-dessus de ladite partie restante (9, 11) de la bande (8, 10), après quoi l'extrémité (29) retourne de l'autre côté de la bande (9, 11) selon un mouvement de remontée, pour ensuite être abaissée en direction de la bande au niveau du côté latéral de la bande, et en ce que la vitesse de ladite extrémité libre est plus élevée pendant le mouvement de poussée réelle.

2. Installation de tri selon la revendication 1, caractérisée en ce que l'extrémité supérieure du bras de manoeuvre (28) est reliée, de manière à pivoter, à l'extrémité d'un bras tournant (24), dont l'extrémité opposée est fixée à une arbre rotatif de sortie d'une unité d'entraînement (22), et en ce que le bras de manoeuvre (28) est articulé, en un point (27) situé entre son extrémité supérieure et l'extrémité libre (29), sur l'extrémité d'un bras oscillant (25), qui est suspendu en un point fixe (26) au-dessus de la bande (9, 11) de telle manière qu'une rotation complète du bras (24) provoque ladite trajectoire et ledit cycle de déplacement de l'extrémité libre (29) du bras de manoeuvre (24 à 28).

3. Installation de tri selon la revendication 1, caractérisée en ce que lesdites bandes transporteuses (4, 5, 8, 10), avec leurs possibilités d'alignement dans le sens longitudinal, sont soutenues par un ensemble de galets, chaque ensemble comportant un galet central ayant un axe sensiblement horizontal, et au moins un galet latéral (31) ayant un axe excentré, sous chacun des bords latéraux des bandes (4, 5, 8, 10), les axes desdits galets latéraux (31) étant orientés vers le haut suivant un certain angle et s'éloignant du galet central.
